# EUROPÄISCHE PATENTSCHRIFT

(11) **EP 2 027 699 B1**
(45) Veröffentlichungstag und Bekanntmachung des Hinweises auf die Patenterteilung: **14.08.2013**
(21) Anmeldenummer: 07722480.6
(22) Anmeldetag: 29.05.2007
(51) Int. Cl.: H04L 29/08, H04N 1/00, H04N 1/32

(54) **SYSTEM UND VERFAHREN ZUM BILD- UND DATENUPLOAD MIT MOBILEM ENDGERÄT**
SYSTEM AND METHOD FOR PICTURE AND DATA UPLOAD WITH A MOBILE TERMINAL
SYSTÈME ET PROCÉDÉ POUR LE TÉLÉCHARGEMENT DE DONNÉES ET D'IMAGES AVEC UN TERMINAL MOBILE

(30) Priorität: 02.06.2006 DE 102006026252; 20.10.2006 DE 102006050409
(43) Veröffentlichungstag der Anmeldung: 25.02.2009
(73) Patentinhaber: NeoMedia Technologies, Inc., Boulder CO 80302 (US)
(72) Erfinder: MÜLLER, Frank, 52074 Aachen (DE); JOUSSEN, Mario, 52385 Nideggen-Wollersheim (DE)
(74) Vertreter: Lucas, Phillip Brian
(86) Internationale Anmeldenummer: PCT/DE2007/000964
(87) Internationale Veröffentlichungsnummer: WO 2007/140745

(56) Entgegenhaltungen:
- WO-A-01/05047
- WO-A-01/88833
- DE-A1-102005 010 146
- GB-A- 2 368 181
- US-A1- 2002 143 860
- US-A1- 2006 002 607
- US-A1- 2007 130 190

## Beschreibung

Die Erfindung betrifft den Upload von Bildinformation zusammen mit dem Upload von mit dieser Bildinformation in Beziehung stehenden Daten (Vermerken) von einem mobilen Endgerät (insbesondere Mobiltelefon) auf einen entfernten Server.

Es ist bekannt, dass mit handelsüblichen Kamerahandys Bilder aufgenommen und gemeinsam mit einer Nachricht z.B. als Multimedia Message (MMS) zu einem anderen Mobiltelefon gesendet werden können. Es ist ebenso bekannt, dass man mit digitaten Fotoapparaten Bilder aufnehmen und zusammen mit Vermerken (wie z.B. Aufnahmedatum und Uhrzeit) auf einen PC übertragen kann, wie zum beispiel aus dem nächsten Stand der Technik, US2007/130190.

Oft sind bei solchen Systemen und Verfahren die Vermerke nicht korrekt und/oder nicht korrekt den Bildern zugeordnet. Wenn z.B. Kalender und Uhr des Fotoapparates falsch eingestellt sind, werden die Bilder mit fehlerhaften Datums- und Zeitangaben gespeichert. Ebenso kann eine einfache Falscheingabe zu einem fehlerhaften Vermerk führen, der nachfolgend nicht mehr entdeckt wird.

Es ist somit Aufgabe der Erfindung, ein System und Verfahren bereitzustellen, mit dem Bilder zusammen mit zugehörigen Vermerken von einem mobilen Endgerät zu einem entfernten Server hochgeladen werden können, bei dem fehlerhafte oder falsch zugeordnete Vermerke vermieden werden. Besonders wichtig ist dies für bildgestützte Dokumentationssysteme, deren Qualität wesentlich davon abhängt, dass Bilder und Vermerke zueinander passen, und die in den Vermerken befindliche Information verlässlich ist.

Die Aufgabe wird vorrichtungsseitig durch ein System nach Anspruch 1 gelöst, das mindestens ein mobiles Endgerät, mindestens einen Server und mindestens zwei an oder auf Gegenständen angebrachte maschinenlesbare Markierungen (z.B. Barcodesymbole oder RFID-Tags) unterschiedlichen Inhalts umfasst, bei dem das Endgerät zumindest zeitweise mit dem Server in Verbindung steht und mit diesem kommuniziert; und bei dem das mobile Endgerät eine Leseeinheit als Mittel zur Lesung maschinenlesbarer Markierungen, mit denen die an oder auf den Gegenständen angebrachten Markierungen gelesen werden können, eine Kamera zur Aufnahme von Bildern, sowie Mittel zum Versenden von Bildern umfasst.

Dadurch, dass das mobile Endgerät mit einem Server zumindest zeitweise in Verbindung steht, und Server und Endgerät miteinander kommunizieren, wird es beispielsweise ermöglicht, Datum und Uhrzeit des Endgerätes mit dem Server abzugleichen, bzw. die Uhr des Endgerätes ferngesteuert einzustellen.

Besonders vorteilhaft ist es, wenn der Dateninhalt der an oder auf den Gegenständen angebrachten maschinenlesbaren Markierungen in Beziehung zu den Gegenständen steht. Dadurch, dass die an oder auf den Gegenständen angebrachten Markierungen vom mobilen Endgerät gelesen werden können, wird es möglich, Informationen über diese Gegenstände automatisiert in das mobile Endgerät einzulesen und weiter zu verwenden. Dadurch dass sich die Markierungen hinsichtlich ihres Inhalts unterscheiden, wird es insbesondere möglich, die Gegenstände eindeutig zu identifizieren.

Der Begriff "mobiles Endgerät" umfasst im Sinne der Erfindung all jene leicht beweglichen Geräte, die für eine Datenaufnahme und Datenwiedergabe geeignet sind. Vorzugsweise sind mittels dieser mobilen Endgeräte zumindest Teile der aufgenommenen Daten am mobilen Endgerät verwendbar oder zumindest im mobilen Endgerät zwischenspeicherbar. Wenn sie im mobilen Endgerät zwischenspeicherbar sind, sind sie vorzugsweise an ein anderes Gerät, wie z.B. einen PC oder einen Laptop übertragbar und können an diesem Gerät kumulativ oder alternativ zu dem mobilen Endgerät verwendet werden. Im Vordergrund stehen hierbei mobile Kommunikationsgeräte, insbesondere Mobiltelefone. Aber auch PDAs oder sonstige Handheld-Endgeräte werden mit dem Begriff "mobiles Endgerät" erfasst. Unter der Bezeichnung "maschinenlesbare Markierung" werden im Sinne der Erfindung Objekte verstanden, in denen Daten gemäß einer vordefinierten Symbologie eingebettet sind und die mit entsprechenden Leseeinheiten ausgelesen werden können. So stellen beispielsweise auf irgendwelchen Substraten aufgedruckte oder auf andere Weise zur Darstellung gebrachte Symbole, wie Schriftzeichen, Barcodes oder Matrix-Codes, maschinenlesbare Markierungen im Sinne der Erfindung dar, da die mit diesen Symbolen verknüpfte Information mit entsprechend programmierten optischen Lesegeräten ermittelt werden können. Es versteht sich, dass auch auf elektronisch veränderbaren Displays, z.B. LCD-Screens dargestellte Symbole maschinenlesbare Markierungen im Sinne der Erfindung darstellen. Ebenso versteht es sich, dass in besonderer Form gestaltete Symbole oder Schriftzüge, wie etwa Logos selbst dann maschinenlesbare Markierungen im Sinne der Erfindung darstellen, wenn sie außer der Information, ein spezielles von anderen Symbolen deutlich unterscheidbares Symbol zu sein, mit keiner weiteren Information verknüpft sind.

Ebenso werden elektromagnetisch auslesbare Datenträger, wie kontaktlose Smartcards, NFC-chips oder RFID-Etiketten, als maschinenlesbare Markierungen im Sinne der Erfindung verstanden, da die Daten auch hier gemäß einer vordefinierten Symbologie eingebettet sind, und mit passend programmierten Lesegeräten ausgelesen werden können.

In diesem Fall bestimmt die Symbologie auch die spezielle physikalische Methode des Auslesens der maschinenlesbaren Markierung, wie etwa Frequenz und Modulation der Anregungs- und Antwortsignale.

Als "Leseeinheit" gilt vorliegend jede Einrichtung, welche in der Lage ist, das Vorhandensein von maschinenlesbaren Markierungen im Sinne der Erfindung in der Umgebung der Leseeinheit zu erkennen und in den maschinenlesbaren Markierungen eingebundene Daten bzw. Informationen zu extrahieren. Die Leseeinheit ist im Sinne der Erfindung derart vorprogrammiert, dass die Leseeinheit maschinenlesbare Markierungen bestimmter Symbologien erkennen kann. Idealerweise lässt sich die Leseeinheit updaten, wodurch sie nachträglich auch für neue, weiteren Symbologien entsprechende, zu erkennende maschinenlesbare Markierungen sensibilisiert wird.

Vorteilhaft ist es, wenn das mobile Endgerät eine Leseeinheit aufweist, die eine Dekodiereinheit zum Dekodieren von in Bilddaten eingebundenen Informationen aufweist, weil mit einer solchen Leseeinheit die in Symbolen, wie Schriftzeichen, Barcodes oder Matrix-Codes, eingebundenen Informationen erkannt und verwendet werden können.

Vorteilhaft ist es, wenn das mobile Endgerät eine Leseeinheit aufweist, die eine Receivereinheit für elektrische, magnetische und/oder elektromagnetische Felder aufweist, weil damit die in elektrisch, magnetisch und/oder elektromagnetisch wirkenden maschinenlesbaren Markierungen eingebundenen Informationen erkannt und verwendet werden können.

In diesem Zusammenhang ist es besonders vorteilhaft, wenn das mobile Endgerät eine Leseeinheit für kontaktlose Smartcards, NFCBausteine und/oder RFID-Etiketten aufweist, weil damit die in solchen maschinenlesbaren Markierungen eingebundenen Informationen erkannt und verwendet werden können.

Im Sinne der Erfindung kann ein "Server" als ein einzelner Computer mit entsprechender Software und einer drahtlosen Schnittstelle z.B. in ein GSM oder UMTS Mobilfunknetz realisiert sein. Es ist aber ebenso gut möglich (und in der Praxis bevorzugt), dass das im Sinne der Erfindung als Server bezeichnete System tatsächlich aus mehreren über ein Netzwerk (z.B. Internet) verbundenen Computern aufgebaut ist.

Es ist vorteilhaft, wenn das System eine Ablaufsteuerung umfasst, weil damit die Lesung von Markierungen, die Aufnahme und der Versand von Bildern gesteuert bzw. koordiniert werden können. Eine solche Ablaufsteuerung kann als Programm auf dem Endgerät ablaufen, und ist dann vorteilhafter Weise mit den Mitteln zur automatischen Identifikation und den Mitteln zur Aufnahme von Bildern verbunden. Sie kann aber auch auf dem Server implementiert sein und den Ablauf auf dem mobilen Endgerät aus der Ferne steuern bzw. überwachen.

Verfahrensseitig wird die Aufgabe durch ein Verfahren nach Anspruch 7 gelöst, bei dem mindestens eine maschinenlesbare Markierung gelesen wird, mindestens ein Bild aufgenommen wird, dieses aufgenommene Bild zu einem entfernten Server übertragen wird, Daten zu einem entfernten Server übertragen werden, die mit den in der maschinenlesbaren Markierung enthaltenen Daten in Beziehung stehen, und bei dem mit Hilfe dieser Daten ein Vermerk erzeugt wird, der mit dem zum Server übertragenen Bild verknüpft wird.

Es ist vorteilhaft, wenn die Übertragung des Bildes und der Daten drahtlos geschieht, weil dadurch eine zeitnahe Übertragung weitgehend unabhängig vom Ort der Bildaufnahme und der Lesung der Markierung gewährleistet wird.

Besonders einfach gestaltet sich die Implementierung seitens des mobilen Endgerätes, wenn die Daten, die zum entfernten Server übertragen werden, in besonders einfacher Beziehung zu den in der Markierung enthaltenen Daten stehen, insbesondere wenn sie einen Teil der in der Markierung enthaltenen Daten enthalten.

Als Beispiel für eine vorteilhafte Ausgestaltung der Erfindung wird im Folgenden ein System beschrieben, mit dem die Anbringung von gedruckten Werbemedien (Plakaten) an Werbeträgern (z.B. Werbetafeln), die im folgenden kurz als "Plakatierung" bezeichnet wird, unterstützt wird, und bei dem Plakatierungen auf einfache und benutzerfreundliche Weise dokumentiert werden. Insbesondere unterstützt das System die Arbeit der Plakatierer durch Online-Übermittlung der Aufträge; und durch die mit der Erfindung ermöglichte zeitnahe und lückenlose Dokumentation der Plakatierungen kann der Außenwerber die Qualität der Plakatierungen überwachen und ein modernes Qualitätsmanagementsystem einrichten.

Ein wesentlicher Bestandteil dieses Systems ist ein ERP-System, mit dem unter anderem die Plakatierungsaufträge der Kunden des Außenwerbers abgewickelt und Aufträge für die Plakatierer zusammengestellt werden, das erfindungsgemäß um eine bildgestütztes Dokumentationssystem mit Datenbank sowie mindestens ein Konzentrator-Modul zur drahtlosen Kommunikation mit mobilen Endgeräten erweitert wird. Dieses so erweiterte ERP-System wird im folgenden "Plakatierungs-Hintergrundsystem" genannt. In einer bevorzugten Ausführungsform verfügt das Konzentrator-Modul über ein GSM-Modem oder UMTS-Modem (oder ist über ein Netzwerk mit einem solchen verbunden), weil damit auf einfache Weise eine Datenkommunikation zwischen dem Plakatierungs-Hintergrundsystem und handelsüblichen Mobiltelefonen möglich ist.

Ein weiterer wesentlicher Bestandteil des Systems stellen die mobilen Endgeräte dar, die die Plakatierer mit sich führen und im Rahmen des Systems verwenden. Diese mobilen Endgeräte beinhalten eine Kamera, Kommunikationsmittel zur Kommunikation mit dem Plakatierungs-Hintergrundsystem und mindestens eine Leseeinheit zum Lesen maschinenlesbarer Markierungen. In einer bevorzugten Ausführungsform werden dazu handelsübliche Kamera-Mobiltelefone verwendet, die mit einem speziellen erfindungsgemäß gestalteten Software-Programm ausgestattet sind. Dieses Software-Programm wird im folgenden Client-Anwendung genannt. Besonders vorteilhaft ist es, wenn die Leseeinheit geeignet ist, optische Markierungen (z.B. DataMatrix-Symbole) zu lesen, da sich diese leicht und preiswert auf den Plakaten aufdrucken lassen. In diesem Zusammenhang ist es weiterhin vorteilhaft, wenn die Leseeinheit die im Endgerät vorhandene Kamera zur Aufnahme der Markierung verwendet, weil dadurch keine zusätzlichen Hardwarekosten anfallen.

An den zum System gehörigen Werbetafeln sind maschinenlesbare Markierungen ("Ortscode-Markierungen") angebracht, die von den Plakatierern mit ihren Endgeräten gelesen werden können. Die an verschiedenen Orten bzw. an verschiedenen Werbetafeln angebrachten Ortscode-Markierungen unterscheiden sich im Dateninhalt, sodass der Inhalt einer Ortscode-Markierung den Ort eindeutig kennzeichnet. In einer Ausführungsform sind die Ortscode-Markierungen als DataMatrix-Codesymbole ausgeführt. In einer weiteren Ausführungsform sind die Ortscode-Markierungen als RFID-Etiketten ausgeführt. In diesem Fall sind natürlich die Endgeräte mit RFID-Leseeinheiten ausgestattet, damit die OrtscodeMarkierungen von den Endgeräten gelesen werden können. Der Inhalt einer Ortscode-Markierung wird im Folgenden als "Ortscode" bezeichnet.

Alternativ oder kumulativ zu diesem Ortscode können Informationen zum gegenwärtigen Standort eines Mobiltelefons auch mittels Lokalisierungsfunktionen eines Netzbetreibers abgefragt und zum Server übermittelt werden. Beispielsweise kann das Mobiltelefon die Nummer derjenigen Basisstation zum Server übermitteln, mit der es in Funkkontakt steht.

Weiter alternativ oder kumulativ zum Ortscode können Informationen zu einem Standort eines Mobiltelefons auch mittels einer Ortungsfunktion des Mobiltelefons abgefragt und zum Server übermittelt werden. Beispielsweise kann ein Mobiltelefon mit einem GPS-Empfänger geographische Koordinaten zum Server übermitteln.

Die Plakate sind ebenfalls mit maschinenlesbaren Markierungen ("Motivcode-Markierungen") versehen, die von den Plakatierern mit ihren Endgeräten gelesen werden können. Es ist vorteilhaft, wenn diese Markierungen in gedruckter Form, also beispielsweise als DataMatrix-Symbol ausgeführt sind, da eine solche Ausführung nur verschwindende Kosten verursacht. Dieser Code wird im Folgenden als Motivcode bezeichnet. Die auf verschiedenen Plakaten, insbesondere auf Plakaten mit verschiedenen Motiven angebrachten Motivcode-Markierungen unterscheiden sich im Dateninhalt, sodass der Inhalt der Motivcode-Markierung das Plakatmotiv eindeutig kennzeichnet. Der Inhalt einer Motivcode-Markierung wird im Folgenden als "Motivcode" bezeichnet.

Ein möglicher Arbeitsablauf stellt sich aus Sicht eines Plakatierers folgendermaßen dar. Zunächst startet der Plakatierer auf seinem Mobiltelefon die Client-Anwendung und meldet sich damit am Plakatierungs-Hintergrundsystem an. Nach erfolgreicher Anmeldung und eventueller Systemüberprüfung (z.B. Uhrenvergleich und/oder Nachstellen der Systemuhr im Mobiltelefon) sowie eventuellem Update der Client-Anwendung erhält der Plakatierer eine Liste von offenen Plakatieraufträgen, die er nachfolgend abarbeiten kann. Besonders vorteilhaft ist es dabei, wenn dem Plakatierer eine komplette Tour individuell zusammengestellt wird, weil der Plakatierer dann keine Routenplanung mehr selbst übernehmen muss, und Umwege weitgehend vermieden werden.

In diesem Zusammenhang ist es auch vorteilhaft, wenn dem Plakatierer Wegbeschreibungen und/oder weitere Routen-Information (z.B. über Staus, Baustellen, Umleitungen. Haltemöglichkeiten) über die Client-Anwendung übermittelt werden.

Es versteht sich, dass sich weitere Plakatierer jederzeit und völlig unabhängig von den anderen Plakatierern mit ihren Handys bzw. Client-Anwendungen am Hintergrundsystem an- und abmelden können. Insbesondere kann eine Vielzahl von Plakatierern gleichzeitig am Hintergrundsystem angemeldet sein.

Der Plakatierer fährt zum ersten Auftragsort seiner Tour. Er überprüft die Auftragsdetails, die ihm vom Plakatierungs-Hintergrundsystem an die Client-Anwendung übermittelt wurden, und führt den angezeigten Auftrag aus.

Für den Fall, dass er sich nicht sicher ist, dass er sich am richtigen (also zum Auftrag passenden) Ort befindet, liest er die an der Werbetafel angebrachte Ortscode-Markierung ein und erhält von der Client Anwendung eine entsprechende Rückmeldung. Dies hat den Vorteil, dass der Plakatierer eine Fehlplakatierung bereits im Vorfeld vermeiden kann.

Es ist auch möglich, dass ein Plakatierer z.B. aufgrund seiner besonderen Ortskenntnis einzelne Standorte der ausgewählten Tour in einer abweichenden Reihenfolge bearbeiten will. In diesem Fall kann der Plakatierer ebenfalls den Ortscode an der Werbetafel einlesen, worauf das Hintergrundsystem dem Plakatierer zu diesem Standort passende Auftragsinformationen liefert.

Im Normalfall wird ein Auftrag die Anbringung eines Plakates oder mehrerer Plakate an einer Werbetafel zum Inhalt haben, wobei die jeweiligen zu verwendenden Motive dem Plakatierer über die Client-Anwendung mitgeteilt werden.

Der Plakatierer kann die auf dem Plakat befindliche Motivcode-Markierung einlesen, und erhält von der Client-Anwendung eine entsprechende Rückmeldung, ob es sich hierbei um das zum Auftrag passende Motiv handelt. Damit kann der Plakatierer für den Fall, dass er sich nicht sicher ist, ob er das richtige Plakat-Motiv ausgewählt hat, eine Fehlplakatierung bereits im Vorfeld vermeiden.

Neben dem zu verwendenden Motiv kann dem Plakatierer als weiteres Auftragsdetail beispielsweise die Anwendung einer bestimmten Plakatiermethode vorgeschrieben werden.

Es ist auch möglich, dass gar kein neues Plakatmotiv angebracht, sondern vielmehr ein bestehendes Plakat beibehalten werden soll, und der Plakatierer lediglich einen Auftrag zu Dokumentation des Zustandes der bestehenden Plakatierung und/oder der Werbetafel erhält. Es kann auch eine Pflegeplakatierung oder Reparaturplakatierung beauftragt werden, bei der das Plakatmotiv beibehalten wird, aber eine zumindest teilweise Neuplakatierung erforderlich ist, um natürliche Abnutzung auszugleichen und/oder Beschädigungen (beispielsweise durch Wettereinflüsse oder Vandalismus) zu reparieren.

Der Plakatierer führt den Auftrag aus, was in den Fällen bedeutet, er wählt ein Plakat mit dem auf dem Mobiltelefon angezeigten zur jeweiligen Werbetafel passenden Motiv aus und bringt dies an der Werbetafel an.

Um die korrekte Ausführung des Plakatierauftrages zu dokumentieren, liest der Plakatierer sowohl die Ortscode-Markierung als auch die Motivcode-Markierung ein.

Daraufhin versetzt die Client-Anwendung das Mobiltelefon in einen Bildaufnahmemodus und fordert den Plakatierer auf, mit der Kamera des Mobiltelefons ein Bild von der ausgeführten Arbeit aufzunehmen. Dieses Bild wird mit den entsprechenden Auftragsdaten, einschließlich einer Benutzerkennung des Plakatierers mit Ortscode und Motivcode sowie Datum und Uhrzeit an das Plakatierungs-Hintergrundsystem übermittelt.

Die Client-Anwendung überprüft dabei, ob Ortscode und Motivcode zueinander und zum Auftrag passen, und gibt dem Plakatierer im Fehlerfall eine entsprechende Rückmeldung und bietet Korrekturmöglichkeiten an.

Ebenso hält die Client-Anwendung den Bildaufnahmemodus nur eine gewisse Zeit lang aktiv, und warnt den Plakatierer, wenn die Aufnahme nicht zeitnah mit der Lesung des Ortscodes und des Motivcodes erfolgt.

Wenn eine Übermittlung des Bildes zusammen mit den entsprechenden Daten (Auftragsdaten, Benutzerkennung, Ortscode, Motivcode, Datum, Uhrzeit) an das Plakatierungs-Hintergrundsystem nicht möglich ist, werden das Bild und die Daten auf dem Mobiltelefon zwischengespeichert und später übermittelt, sobald bessere Übertragungsbedingungen den Upload zum Hintergrundsystem wieder ermöglichen. Dieser Fall kann beispielsweise bei Plakatier-Aufträgen in U-Bahn-Stationen auftreten, in denen keine gute Mobilfunkabdeckung besteht. Vorteilhaft ist hierbei, wenn die Timestamps der Bildaufnahme und der Lesung der Codes übertragen werden, da diese Zeitangaben stark von dem Zeitpunkt der Übertragung abweichen können.

Es kommt auch vor, dass ein Plakatierer an der Ausführung eines Auftrags gehindert ist, weil äußere Umstande eine Plakatierung nicht ermöglichen. So können Werbetafeln beispielsweise zeitweise unzugänglich sein (zugeparkt, Baustelle) oder zerstört sein (Sturmschaden, Vandalismus). In diesem Fall kann der Plakatierer über seine Client-Anwendung eine entsprechende Mitteilung mit dokumentierendem Foto an das Hintergrundsystem übermitteln. Vorteilhaft ist dies insbesondere, weil das Hintergrundsystem ohne Zeitverzögerung einen Ersatzstandort für das sonst anzubringende Motiv ermitteln und damit sofort einen neuen weiteren Auftrag erzeugen kann, der dann von einem der Plakatierer in der nächsten Zeit ausgeführt wird.

Als weiteres Beispiel für eine vorteilhafte Ausgestaltung der Erfindung wird im Folgenden ein Dokumentationssystem beschrieben, mit dem auf einfache und benutzerfreundliche Weise der Zustand von Mietwagen dokumentiert werden kann.

Bei Rückgabe eines Mietwagens wird der Zustand des zurückgegebenen Wagens durch Begutachtung ermittelt und in einem Dokumentationssystem, das auch eine Datenbank umfasst, dokumentiert.

Die Dokumentation wird auf dem Parkplatz des zurückgegebenen Wagens mittels eines entsprechend programmierten Kamera-Handys (Smartphone) von einem Mitarbeiter der Mietwagenfirma durchgeführt. Das Smartphone ist unter anderem so programmiert, dass es mit der Handy-Kamera erfasste Autokennzeichen (Nummernschild) lesen kann.

Der Mitarbeiter der Mietwagenfirma startet bei der Rückgabe des Mietwagens auf dem Parkplatz das Programm auf dem Handy, das sich über das Mobilfunknetz mit dem Dokumentationssystem verbindet. Danach liest der Mitarbeiter mit dem Handy das Kennzeichen des Mietwagens, woraufhin der Inhalt des Kennzeichens an das Dokumentationssystem weitergeleitet wird.

Daraufhin erhält der Mitarbeiter auf dem Handy eine dem zugehörigen Mietwagen entsprechend vorausgefüllte Bildschirmmaske. Insbesondere enthält diese Maske Informationen über kleine noch nicht reparierte Beschädigungen (z.B. Kratzer), die bereits vor der Vermietung an den letzten Kunden vorhanden waren. Wenn von diesen Beschädigungen Bilder in der Datenbank vorhanden sind, kann der Mitarbeiter sich diese auf dem Handy ansehen und direkt vor Ort mit dem zurückgegebenen Wagen vergleichen.

Stellt der Mitarbeiter Beschädigungen fest, kann er diese Beschädigungen mit dem Handy aufnehmen und direkt über GPRS an das Dokumentationssystem weiterleiten. Dadurch, dass vorher bereits das Kennzeichen des Mietwagens gescannt wurde, kann das Kennzeichen automatisch vom Handy-Programm gemeinsam mit dem Bild weitergeleitet werden, ohne dass der Mitarbeiter das Kennzeichen des Wagens von Hand eingeben muss. Dadurch werden fehlerhafte Zuordnungen in der Datenbank durch Falscheingaben vermieden.

Das Ziel der vorliegenden Erfindung liegt darin, ein Verfahren zur Übertragung von Informationen, insbesondere von Bilddaten bereit zu stellen, bei dem mehrere Bilder aufgenommen werden. Nach einem ersten Aspekt der Erfindung wird ein Teil dieser Bilder in Abhängigkeit von ihrem Aufnahmezeitpunkt als Bilderfolge verknüpft. Kumulativ oder alternativ wird vorgesehen, dass zumindest ein Teil der Bilder einem Bilderkennungsverfahren zugeführt wird und in Abhängigkeit von der erkannten Bildart als Bilderfolge verknüpft wird. Weiterhin wird alternativ oder kumulativ vorgeschlagen, dass zumindest ein Teil der Bilder versandt wird und beim Empfänger in Abhängigkeit vom Absender als Bilderfolge verknüpft wird.

Es wird somit eine spezielle Bilderfolge in Abhängigkeit vom Zeitpunkt der Aufnahme, der Bildart und/oder dem Abserider zusammengestellt. Diese Zusammenstellung kann direkt am Bildaufnahmegerät oder nach einem Versand der Bilder bei einer Bildverarbeitungseinrichtung, die dem Versand nachgeschaltet ist, vorgenommen werden. Außerdem können manche Bilder direkt bei der Bildaufnahme und andere Bilder erst nach dem Versand beim Empfänger einem Bilderkennungsverfahren zugeführt werden.

Die Erfindung beinhaltet auch eine Plakatwand mit einer maschinenlesbaren Markierung. Vorzugsweise weist die Plakatwand ein Plakat auf, das ebenfalls eine maschinenlesbare Markierung aufweist. Die maschinenlesbare Markierung ist auf dem Plakat vorzugsweise auf dessen Rückseite angebracht. Derartige Vorrichtungen erleichtern die Durchführung des oben genannten Verfahrens.

## Patentansprüche

1. System zur drahtlosen Übertragung eines Bildes von einem mobilen Endgerät auf einen Server, das mindestens ein mobiles Endgerät, mindestens einen Server und mindestens zwei an oder auf Gegenständen angebrachte maschinenlesbare Markierungen unterschiedlichen Inhalts umfasst; wobei der Dateninhalt der an oder auf den Gegenständen angebrachten maschinenlesbaren Markierungen in Beziehung zu den Gegenständen steht; wobei das Endgerät zumindest zeitweise mit dem Server in Verbindung steht und mit diesem kommuniziert; und wobei das mobile Endgerät eine Leseeinheit als Mittel zur Lesung maschinenlesbarer Markierungen, mit denen die an oder auf den Gegenständen angebrachten Markierungen gelesen werden können, eine Kamera zur Aufnahme von Bildern, sowie Mittel zum drahtlosen Versenden von Bildern umfasst, ***dadurch gekennzeichnet, dass*** das System eine Ablaufsteuerung umfasst, mit der die Lesung von Markierungen, die Aufnahme und der Versand von Bildern derart gesteuert oder koordiniert werden kann, dass mit dem System ein Bild mit dem Verfahren nach Anspruch 7 von einem mobilen Endgerät drahtlos auf einen Server übertragen werden kann.

2. System nach Anspruch 1, ***dadurch gekennzeichnet, dass*** die Leseeinheit eine Dekodiereinheit zum Dekodieren von in Bilddaten eingebundenen Informationen aufweist.

3. System nach einem der Ansprüche 1 bis 2, ***dadurch gekennzeichnet, dass*** die Leseeinheit eine Receivereinheit für elektrische, magnetische und/oder elektromagnetische Felder aufweist.

4. System nach einem der Ansprüche 1 bis 3, ***dadurch gekennzeichnet, dass*** das Endgerät eine Leseeinheit für kontaktlose Smartcards, NFC-Bausteine und/oder RFID-Etiketten aufweist.

5. System nach einem der Ansprüche 1 bis 4, ***dadurch gekennzeichnet, dass*** die Ablaufsteuerung auf dem Endgerät abläuft.

6. System nach einem der Ansprüche 1 bis 5, ***dadurch gekennzeichnet, dass*** das mobile Endgerät ein Mobiltelefon ist.

7. Verfahren zur Übertragung eines Bildes von einem mobilen Endgerät auf einen Server, ***dadurch gekennzeichnet, dass**,* mindestens eine maschinenlesbare Markierung gelesen wird, mindestens ein Bild aufgenommen wird, dieses aufgenommene Bild drahtlos zu einem entfernten Server übertragen wird, Daten drahtlos zu einem entfernten Server übertragen werden, die mit den in der maschinenlesbaren Markierung enthaltenen Daten in Beziehung stehen, und bei dem mit Hilfe dieser Daten ein Vermerk erzeugt wird, der mit dem zum Server übertragenen Bild verknüpft wird.

8. Verfahren nach Anspruch 7, ***dadurch gekennzeichnet, dass*** die Daten die zum entfernten Server übertragen werden zumindest einen Teil der in der maschinenlesbaren Markierung enthaltenen Daten enthalten.

## Claims

1. System for wirelessly transmitting an image from a mobile terminal to a server, which system comprises at least one mobile terminal, at least one server and at least two machine-readable markers of different content attached to or on items; wherein the data content of the machine-readable markers attached to or on the items relates to the items; wherein the terminal is at least intermittently in contact with the server and communicates with the latter; and wherein the mobile terminal comprises a reader as means for reading machine-readable markers, by means of which the markers attached to or on the items can be read, a camera for recording images, as well as means for wirelessly sending images, ***characterized in that*** the system comprises a sequence control with which the reading of markers, and the recording and sending of images can be controlled or coordinated such that, with the system, an image can be transmitted wirelessly from a mobile terminal to a server using the method according to claim 7.

2. System according to claim 1, ***characterized in that*** the reader has a decoder for decoding information embedded in image data.

3. System according to one of claims 1 to 2, ***characterized in that*** the reader has a receiver for electric, magnetic and/or electromagnetic fields.

4. System according to one of claims 1 to 3, ***characterized in that*** the terminal has a reader for contactless smartcards, NFC chips and/or RFID tags.

5. System according to one of claims 1 to 4, ***characterized in that*** the sequence control runs on the terminal.

6. System according to one of claims 1 to 5, ***characterized in that*** the mobile terminal is a mobile telephone.

7. Method for transmitting an image from a mobile terminal to a server, ***characterized in that*** at least one machine-readable marker is read, at least one image is recorded, this recorded image is transmitted wirelessly to a remote server, data which relate to the data contained in the machine-readable marker are transmitted wirelessly to a remote server, and in which, with the help of these data, a comment which is associated with the image transmitted to the server is generated.

8. Method according to claim 7, ***characterized in that*** the data which are transmitted to the remote server will contain at least some of the data contained in the machine-readable marker.

## Revendications

1. Système de transmission sans fil d'une image à partir d'un terminal mobile vers un serveur, qui comprend au moins un terminal mobile, au moins un serveur et au moins deux marquages de contenu différent lisibles par machine et mis en place contre ou sur des objets ; le contenu de données des marquages lisibles par machine et mis en place contre ou sur les objets étant en relation avec les objets ; le terminal étant en liaison au moins par intermittence avec le serveur et communiquant avec celui-ci ; et le terminal mobile comprenant une unité de lecture comme moyen de lecture de marquages lisibles par machine avec lequel les marquages mis en place contre ou sur les objets peuvent être lus, une caméra pour l'enregistrement d'images ainsi que des moyens pour l'envoi sans fil d'images, ***caractérisé en* ce *que*** le système comprend une commande séquentielle avec laquelle la lecture de marquages, l'enregistrement et l'envoi d'images peuvent être commandés ou coordonnés de telle sorte que, avec le système, une image peut être transmise sans fil à un serveur par un terminal mobile avec le procédé selon la revendication 7.

2. Système selon la revendication 1, ***caractérisé en ce que*** l'unité de lecture présente une unité de décodage pour le décodage d'informations intégrées dans des données d'images.

3. Système selon une des revendications 1 à 2, ***caractérisé en ce que*** l'unité de lecture présente une unité de récepteur pour des champs électriques, magnétiques et/ou électromagnétiques.

4. Système selon une des revendications 1 à 3, ***caractérisé en ce que*** le terminal présente une unité de lecture pour des cartes à puce, composants NFC et/ou étiquettes RFID sans contact.

5. Système selon une des revendications 1 à 4, ***caractérisé en ce que*** la commande séquentielle se déroule sur le terminal.

6. Système selon une des revendications 1 à 5, ***caractérisé en ce que*** le terminal mobile est un téléphone mobile.

7. Procédé de transmission d'une image à partir d'un terminal mobile vers un serveur, *caractérisé en ce qu*'au moins un marquage lisible par machine est lu, au moins une image est enregistrée, cette image enregistrée est transmise sans fil à un serveur distant, des données sont transmises sans fil à un serveur distant, données qui sont en relation avec les données contenues dans le marquage lisible par machine, et dans lequel une note peut être produite à l'aide de ces données, cette note étant reliée à l'image transmise au serveur.

8. Procédé selon la revendication 7, ***caractérisé en ce que*** les données qui sont transmises au serveur distant contiennent au moins une partie des données contenues dans le marquage lisible par machine.
